# EUROPEAN PATENT SPECIFICATION

(11) **EP 4 141 604 B1**
(45) Date of publication and mention of the grant of the patent: **03.04.2024**
(21) Application number: 22182348.7
(22) Date of filing: 11.02.2019
(51) Int. Cl.: G05D 1/02, A01K 1/01

(54) **METHOD AND ARRANGEMENT FOR MANURE HANDLING**
VERFAHREN UND ANORDNUNG ZUR GÜLLEBEHANDLUNG
PROCÉDÉ ET SYSTÈME DE MANIPULATION DE FUMIER

(30) Priority: 13.02.2018 SE 1850152
(43) Date of publication of application: 01.03.2023
(62) Divisional of application: 19710174.4
(73) Proprietor: DeLaval Holding AB, 147 21 Tumba (SE)
(72) Inventor: FURDAK, Józef, 14721 Tumba (SE); HOFMAN, Piotr, 14721 Tumba (SE); JAKLIK, Bartlomiej, 14721 Tumba (SE); MALECKI, Marcin, 14721 Tumba (SE); PROKOWSKI, Mateusz, 14721 Tumba (SE)
(74) Representative: DeLaval International AB

(56) References cited:
- CN-B- 103 983 216
- US-A1- 2012 291 714
- US-A1- 2015 223 427

## Description

Today, autonomous vehicles are developed, which are capable of e.g. collecting horse manure or cow manure (WO2016/023716 A1; EP2731420 B1). There are also autonomous vehicles which are used for moving/displacing animal feed, sometimes called "feed pushers". Some of these autonomous vehicles are equipped with a camera, which is used for navigating the environment, while others have preprogrammed routes and/or navigates by use of radio beacons.

One example of an autonomous vehicle is the so-called "Zauberzeug", developed by Perpetual Mobile GmbH (http://www.zauberzeug.de/). This vehicle is guided by a camera, which is mounted on a wall, overlooking an area where the autonomous vehicle is to operate. By use of image processing technique, the camera can also detect piles of e.g. horse manure or rocks, which are clearly visible against a light background. Information regarding the location of the horse manure can then be transferred to the autonomous vehicle, which may pick it up or sweep it away.

It is generally thought that autonomous vehicles are the future. Although autonomous vehicles are appealing, they are associated with problems of their own

The inventors have realized a number of problems associated with more traditional equipment for manure handling, and have come up with inventive solutions to these problems. Some of the solutions described herein may be applicable also to autonomous vehicles. However, this will not be discussed herein.

In a barn or other building where animals, such as dairy or meat animals are kept, there will be manure. Some animals produce more manure than others, but as an example, one cow can produce about 50 kg of manure per day, which makes the requirements on manure handling equipment very high. The consistency and/or other properties of some types of manure or effluents also makes the environment and working conditions for manure handling equipment extremely hostile and difficult.

One type of manure handling devices is so-called scrapers. Scrapers may have different sizes and shapes, and are typically pulled along an alley by a chain, rope or wire. The scrapers displace the manure along the alleys, e.g. such that it either is drained through a slated/slit/vented floor, or is displaced to a special drain where it may propagate to a sewer, or similar, leading e.g. to a manure tank or a manure lagoon. When using the term "scraper" herein, this term is not intended to include autonomous vehicles. The solution described herein enables a more efficient use of a widely spread technology for manure handling.

US 2015/0223427 A1 discloses a method of cleaning a cubicle using an autonomous unmanned vehicle, which may comprise a camera for detecting the presence of manure and/or dirt in the cubicle.

The invention relates to a method for controlling the operation of a manure scraper, and control unit, according to the independent claims.

### Self-learning the alley

Scrapers typically run along an alley. Their route has a start position and an end (or stop) position, and may pass a number of locations where the effluent can be drained to a sewer. The alley need not be straight, but can have bends or curves. A wide or long alley could be provided with two or more scrapers, each cleaning a part of the alley, either consecutively along the alley or in parallel for the same segment of the alley.

According to embodiments of the subject matter described herein, one or more cameras may be mounted along an alley where a scraper is to run. The number of cameras used can depend on the length, width and/or other properties of the area to be cleared from manure, and/or on properties of the cameras (such as covered area/capacity). The number and/or capacity of the cameras should be enough for covering the area(s) in which it is desired to control the activity of a scraper. For example, a first camera can be mounted such that its field of view comprises an intended starting point/position of the scraper(s), and a second camera may be mounted such that its field of view comprises an intended end point/position of the scraper(s). Preferably, the cameras are mounted e.g. in the ceiling or on walls, or similar, at some distance from the floor, and thus also from the manure and animals. Preferably, enough cameras are used, such as for the majority, or even all of the scraper's route to be covered by the cameras in cooperation. The combined fields of view of the cameras may cover the length of the scraper route.

The cameras obtain/capture images, which may be provided to a processing unit provided/configured with/ adapted for image processing, e.g. provided with appropriate software and hardware capacity. The processing unit/ image processing software may be configured for/capable of image recognition and object recognition.

During a configuration phase, a scraper may be put in a starting position (e.g. intended or suitable starting position), which position is then triggered to be registered by the camera(s)/processing unit as a starting position. The scraper may then be moved to an end position (e.g. intended or suitable end position), which position is then triggered to be registered by the camera(s)/processing unit as an end position. Such triggering of positions may be managed via a relatively simple configuration interface run e.g. on a mobile device.

A user control interface could be created, which is to be run on a user device (such as a computer, a Smartphone or a tablet), in which a virtual map is created of the area in which the scraper is to be operated, based on information derived from images captured by the one or more cameras. The virtual map could be presented as an image of the whole area or one or more parts of an area in which the scraper is to be operated. The virtual map need not correspond to what is captured within the field of view of one camera, but could be composed from information from a plurality of cameras, or only from parts of what is obtained from the one or more cameras. For example, by use of such a user control interface, a certain image area may be defined as a scraper body (e.g. a part of the image which comprises the scraper body), and certain position in the virtual map/image may be defined as end and start positions of the scraper. The input from the user control interface, e.g. the selected/identified location of start and end positions for the scraper could then be provided to a processing unit, which could use this information as reference when to detect whether the scraper has reached a start or end position. The use of such an interface may or may not remove the need of physically placing the scraper in those positions. Other positions and areas may be programmed in the same manner, creating a virtual route of the scraper.

Such an interface could be used for different initialization and/or configuration tasks. For example, it could be used for defining intervals or areas of the working area which are not covered by any camera. The length of the alley/working area could be inserted into the interface, and possibly also a length of a non-camera covered area. An alternative method for defining/determining a non-camera covered distance is to run the scraper at constant speed along the whole length of operation (from start to end position), and then based on camera information captured during this run, estimate any distance of the route that is not covered by a camera (captured in the field of view of any camera). This would be possible to determine automatically when the length of the route is known. (Depending on what type of area that is not covered by cameras, it may be suitable to run the scraper at slow speed in such areas and/or apply other types of safety mechanisms if there is a risk of running into obstacles (e.g. animals) there.

The images from the one or more cameras, and/or information derived based on the images, may be provided to the same (one) processing unit, where the information may be processed separately or in combination such that e.g. information on the position of the scraper may be derived.

Thus, given that a start position and an end position is derived/obtained/registered, a route of the scraper may be derived by the processing unit. The information on the route derived by the processing unit may be used to control the operation/running of the scraper, either directly by the processing unit, which may control e.g. a motor driving the scraper, or via some other control equipment.

The processing unit could e.g. trigger a motor to stop and reverse, when the scraper is determined (e.g. by means of image processing) to have reached its end position, and then trigger the motor to stop reversing and start forward operation, i.e. scraping, when the scraper is determined (e.g. by means of image processing) to have reached its end position.

Similarly, the scraper (the motor driving the scraper) may be controlled to e.g. adjust the speed at some intermediate position, which may be registered in a similar manner as the start and end position. Such an intermediate position may be associated with a stationary obstacle, which e.g. requires a reaction of the scraper operation, such as folding of the scraper to avoid the obstacle. The intermediate position may otherwise be associated with e.g. a feeding station or crossing animal pathway, where a different, e.g. lower speed may be desired in order to avoid scaring or hitting any animals.

### Replacing used "end of the alley" detection methods

One aspect of this is that other methods for detecting when a scraper has reached an end position may be replaced by the herein suggested technology. In some embodiments, a single camera may be used, e.g. only at the end of an alley, for enabling detection of when the scraper has reached and end position and control a scraper driving motor based on this information. Previously, different solutions have been used, such as switches, which are pushed by the scraper when reaching a position (e.g. passing over the switch), or observation of the motor activity, e.g. in form of observing/deriving how long/far a wire/chain or other type of the pulling means to which the scraper is connected has been pulled by the motor.

### Calibration of scraper position

A problem with scrapers which are operated by means of a wire or other similar mechanism is elongation of said wire due to the strain and/or wear during the operation. Thus, using the motor activity or wire length to determine the position of the scraper might be unreliable. By use of image processing based on images captured by a camera having a scraper end point in a scraper alley in its field of view, the scraper driving mechanism could be calibrated and/or adjusted based on a determined elongation of the wire and/or slippage of the wire in the driving mechanism. For example, an estimated position of the scraper in the alley, which is determined based on information associated with the motor's driving force and/or a run length of the wire may be compared with an observed position of the scraper determined based on image processing by a processing unit connected to a camera capturing an image of the scraper. Based on the difference between the two positions, the estimated and the observed one, the estimated position could be corrected or calibrated. For example, a value for the estimated position could be set to the observed position in a processing unit; the estimation calculation could be adjusted to compensate for the difference between the estimated and the observed scraper position; the wire could be automatically shortened or stretched, by means of a shortening/stretching mechanism. Alternatively, an alert signal could be provided, e.g. to a user interface, indicating how much the wire should be shortened, in case the wire must be attended to manually. Further, the elongation of the wire over time could be estimated based on the elongation between calibrations, given that the time between calibrations is registered or otherwise obtained. Thereby an automatic compensation for the elongation over time could be performed, by a reoccurring automatic adjustment of the wire length; the estimation calculation and/or reoccurring alert signals to a user, when a wire or other driving mechanism is estimated to have become e.g. X % longer than at the last calibration. The elongation could be verified by observing the actual scraper position e.g. when being operated in a forward direction and/or when being operated in a reverse direction. Self-adjusting a cleaning schedule

Embodiments of the subject matter described herein could also be used for adjusting a cleaning schedule of a scraper solution. A cleaning schedule is normally preprogrammed based on time, such that the scraper is started and run at certain periods during the day and/or night. Such embodiments could involve one or more cameras placed at at least a certain height over the floor having at least part of the alley in its/their field of view. Thereby, images obtained by the camera(s) may be analyzed by means of image processing, and the actual need and/or amount of manure to be cleared by a scraper may be estimated in real-time, or close to real-time. Information derived based on the images may then be used for controlling the activation, operation and deactivation of the scraper.

For example, during summer in the Nordic countries, animals are let out for pasture, while they still have access to the barn in order to be able to visit an automatic milking station and/or to eat additional feed (i.e. in addition to the grazing). During such times, the amount of manure present on the barn floor at different times of day may vary substantially from day to day, depending on things like weather or temperature (how much time the animals spend in the barn). By estimating the amount of manure that needs to be cleared by a scraper, the scraper could be activated according to a set of rules in dependence of this amount. For example, by testing the capacity of a scraper, it could be derived a maximum amount of manure which can be handled by the scraper in one sweep. The scraper may then be activated e.g. when this derived maximum amount of manure is observed (by means of image processing) in the alley. The consistency of the manure may also be important for a decision to activate the scraper. For example, dried cow manure may be very difficult to remove. Thus, the consistency of the manure may be estimated based on camera images, e.g. by determining light reflections in the manure (dry manure reflects less light). Based on the derived information, the scraper can be activated and run e.g. just before the manure becomes too dry to displace. This can be done irrespective of whether the amount of manure to be cleared has reached a certain level or not. Decisions based on automatically observed manure conditions may be used in addition to a timer based scraper schedule, or, the scraper could be run entirely based on automatically observed real-time conditions.

Moreover a watering system may or may not be connected with the image recognition system adding water to the manure if needed.

Thereby, energy can be saved e.g. by not running the scraper too often, and/or by not having to/trying to clear dried manure.

### Dynamic control of scraper speed

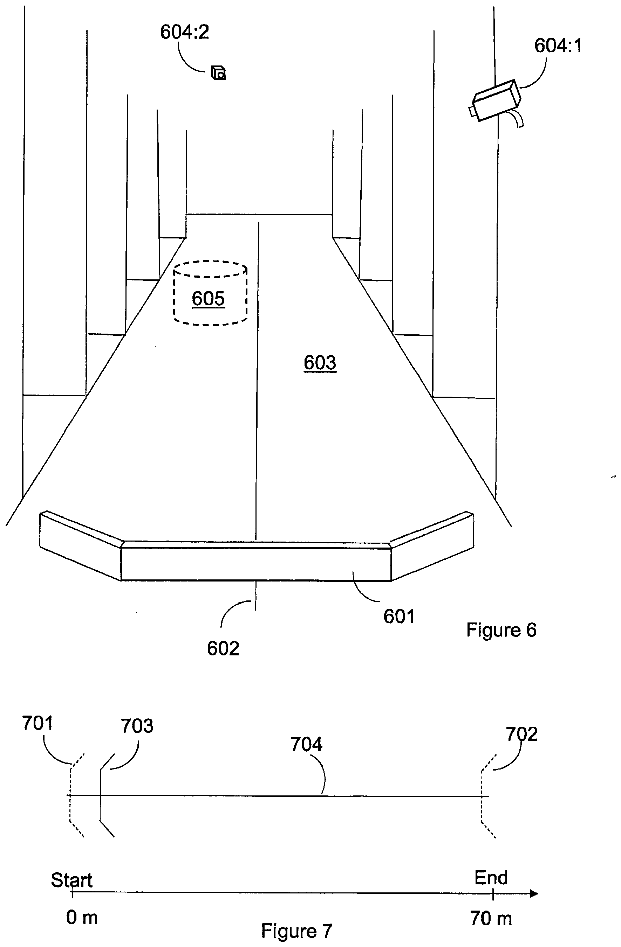

By observing the amount of manure present at different parts of an area which is to be cleared by a scraper, e.g. an alley, the speed of the scraper can be dynamically adapted to the observed presence of manure. For example: in an alley which is 70 meters long, and the scraper start position is at 0 meters and end position is at 70 meters (cf. figure 7), it has been determined that there is manure to be cleared in the interval 40-60 meters, but not so much in the rest of the alley. Based on this information, the scraper could be run at relatively high speed from 0-40 meters, and then when reaching 40 meters (where manure has been observed) be controlled to adopt a slower speed, more appropriate for displacing manure. This lower speed could be maintained e.g. until the manure is cleared to a drain. In case a scraper has cleared observed manure in the 20-30 meter interval in a 100 meter alley, and there is a drain at 50 meters and there is no observed manure to clear in the 50-100 meter interval, the scraper could be reversed to a start position. In this 100 m example, the scraper could be run at relatively high speed in the interval from 0-20 meters of the alley, then at an appropriate work speed between 20-50 meters, when displacing manure to a drain. The occurrence of drains could be made known to the processing unit deriving information from images captured by cameras, e.g. during a configuration phase, where it has been indicated to the processing unit that a current position of the scraper should be associated with a drain/sewer. Alternatively, this information could be derived, e.g. by the processing unit, by providing information about the load on the motor driving the scraper to the processing unit. Based on the load on the motor, it could be derived that the load on the motor/scraper is reduced/decreased at a certain observed scraper position. This information may be used by the processing unit to conclude that the position is associated with a drain, and this conclusion may be used in future calculations and e.g. control of scraper speed. Such determining of drain positions may be performed e.g. during an initialization period.

The scraper speed in addition be controlled in dependence of observed presence of obstacles, such as animals, in the alley in which the scraper is to run. This will be described in more detail below.

### Obstacle detection

When running automatic devices amongst living creatures, safety is an important issue. A scraper needs to be powerful enough to be able to push a heavy manure, and thus it may also harm animals getting in its way, especially small animals, such as calves. This is often solved by running the scraper manually with a human observer and/or at a very slow speed, such that the animals have time to observe it and to move away. There may also be a safety stop in the scraper control system, such that when the scraper is determined, based e.g. on increased required driving force/power consumption, to have hit an obstacle, the scraper stops for a period of time, and then starts moving again.

According to embodiments of the invention, cameras mounted e.g. on a wall or in the ceiling, capture images of the area of operation of a scraper, and these images may then be processed by image processing software run on a processing unit, which may perform object recognition, not only in regard of the scraper, but also for animals or machines present in the area. For example, the relation between observed positions and/or movement directions and velocity of the scraper and an animal or machine could be analyzed in real-time, or close to real-time and an action could be triggered based on the analysis, such as controlling the scraper to stop in order to avoid colliding with/hitting the animal, or to slow down or speed up in order to avoid a collision with the animal. Thereby, safety may be maintained, while still running the scraper efficiently, e.g. by avoiding long safety stops. The scraper can be stopped before colliding with an animal, also when an animal walks in the same direction as the scraper with a slightly higher speed than the scraper. Eventually, the animal would pass the scraper and place a hoof in front of the scraper. By means of embodiments of the invention, the scraper can be stopped just before the animal reaches the scraper or places its hoof in the route of the scraper i.e. before the animal risks being injured/hit by the scraper. The software and/or processing device could be configured to have special rules for different obstacles/animals. For example, more cautious safety rules in terms of stopping and slowing down the scraper could be applied for animals below a certain size and/or having a certain movement pattern, such as calves and other young stock, such as lambs or kids (goat or human). This may be done with the insight that young animals may not have enough experience of how to assess the risk of a moving scraper, and may also have a less developed sense of balance. Young and/or small animals may also be quite light-weight as compared to adult animals, and thus e.g. not be sensed by a scraper safety mechanism being based on power consumption/applied force of the motor running the scraper. The power sensing control system connected with the image recognition may be supplied with the information of the source of the increased load and take action accordingly to programmed and/or gathered information e.g. continue the movement or to trigger a stop of the scraper.

Further, a safety system based on image processing as suggested herein, would also prevent overload on the scraper driving mechanism, which may otherwise occur when e.g. heavy animals or machines block the way for the scraper and a safety mechanism based on power consumption/applied force, or similar, is non-existent or not working.

If someone has placed a static heavy object in the alley, which block the scraper, e.g. for a certain amount of time, an alert signal could be sent to a user interface or similar, indicating e.g. that the situation needs human interference. This could also be relevant if/when animals have blocked the path of the scraper for a certain amount of time, entailing e.g. that the amount of manure increases over a certain level due to the interrupted scraper function.

By having control of the position, movement direction and/or speed of the scraper and any animal, machine and/or other object in its way, the speed of the scraper could be controlled in an efficient way. For example, when it is determined that the alley is clear of animals and objects, the scraper could be controlled to run at a higher speed than if there is an observed risk of an animal stepping in the way of the scraper. This knowledge could be combined with the detection of manure presence described above, and the speed of the scraper could be controlled based both on location of obstacles to be avoided and on amount and position of manure to clear. The speed of the scraper could be automatically selected e.g. from a set of different speeds in dependence of occurrence of obstacles and manure. In other embodiments, the speed could be varied dynamically, e.g. between 0 m/s and a predetermined maximum speed. For example: No observed obstacles in an alley segment with no manure could entail selection of the highest speed. In this case, the highest speed could be selected irrespective of whether the scraper moves in the forward or reverse direction. When an animal having a collision course with the scraper is detected, the speed of the scraper could be selected such as to ensure that the collision is avoided, e.g. that the animal is allowed enough time (at a certain speed) to cross and leave the intended route of the scraper. If the animal deviates from the calculated path, e.g. stops or otherwise changes its speed or direction, this will also be detected based on the image processing/object recognition and the movement of the scraper could be controlled to adapt to the situation.

### Detection of broken driving mechanism

Although it is not supposed to happen, the wire/rope/chain/cable driving a scraper may break or disconnect. This could be detected by a safety mechanism sensing the force applied to move the scraper, but not necessarily. The broken wire could get caught in something and give rise to a resistance similar to the one of a propagating scraper. This insight together with use of the vision technology suggested herein enables detection of a discrepancy between an expected movement of the scraper (expected based e.g. on applied force) and an actual movement of the scraper (observed/registered/detected by means of image analysis/object recognition). Based on this difference, it may be concluded by the software and/or processing unit that the driving mechanism, e.g. the wire, or corresponding, is broken. This conclusion may lead to an alert signal in form of an indication, such as an SMS or corresponding message, to a user interface, and/or to audible and/or visual alert signal, calling for human attention.

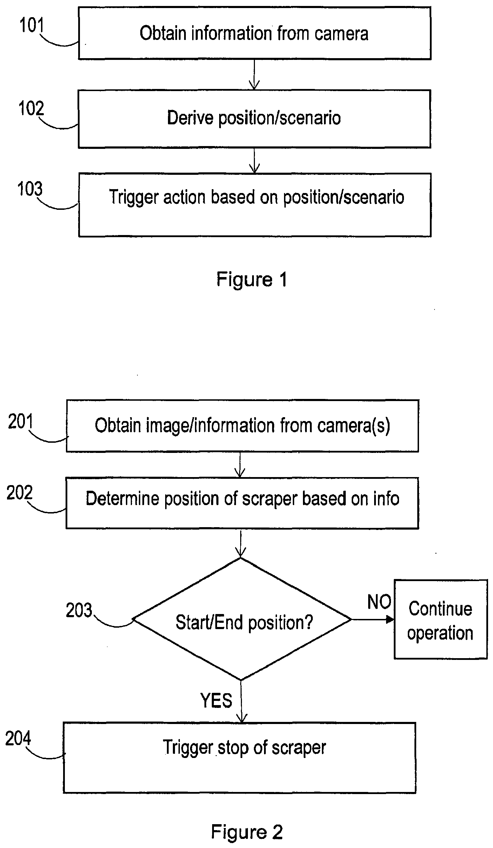

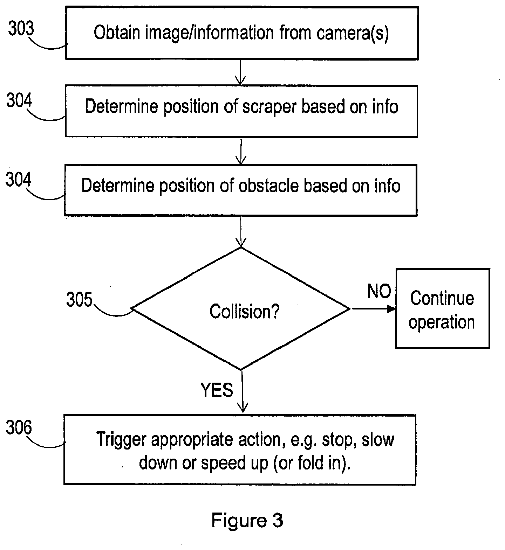

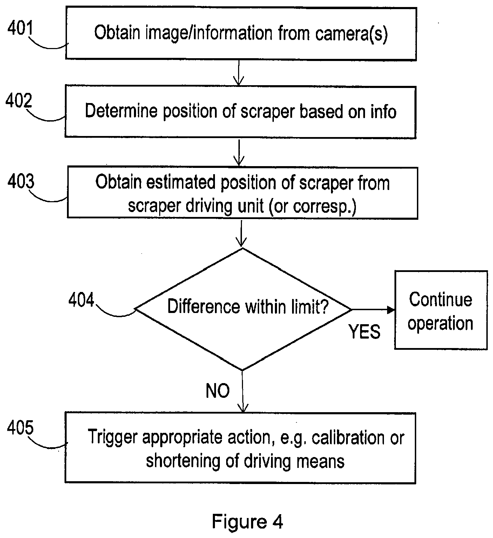

Figures 1-4 shows different exemplifying flowcharts illustrating methods associated with the embodiments described above.

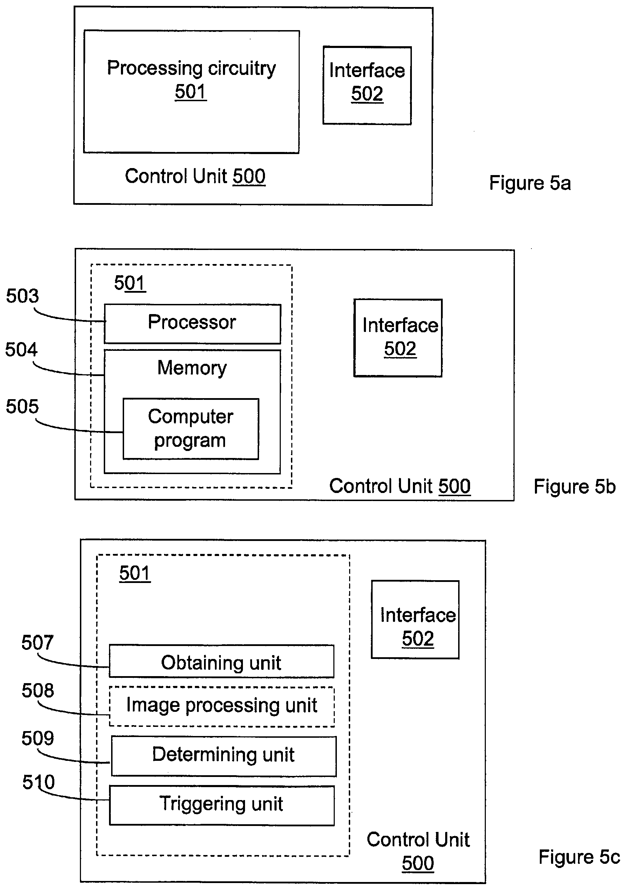

### Exemplifying embodiments of control unit (processing unit), figures 5a-5c

An exemplifying embodiment of a control unit is illustrated in a general manner in figure 5a. The control unit is operable to control, e.g. trigger, a scraper arrangement comprising e.g. a scraper driving unit and/or a scraper. The scraper arrangement may be controlled to perform actions in response to information obtained from one or more cameras and possibly from a user interface. The control unit may be assumed to be operable to receive signals from one or more camera sensors. The signals may comprise information directly or indirectly relating to images captured by the one or more cameras. The information may be transferred via any type of wired or wireless communication, or a combination thereof, between the cameras and the control unit. The control unit may further be operable to obtain signals from a scraper driving unit, such as a processing unit associated with a motor unit responsible for providing a force in order to drive the scraper.

The control unit may be comprised in a system controller in a barn or be comprised in, or as an "add on" module (additional functionality) to one of the cameras. Such a module could be a part of a camera or a system controller, or could alternatively be external to the one or more cameras and/or other central control equipment. For example, the control unit could be a part of a central system or arrangement for controlling a plurality of barn equipment. The control unit may alternatively be denoted e.g. "control device" or "processing unit". The communication between the control unit and other entities may be performed over a state of the art wireless and/or wired interface. The control unit 500 is configured to perform the actions of at least one of the method embodiments described above. The control unit 500 is associated with the same technical features, objects and advantages as the previously described method embodiments. The control unit will be described in brief in order to avoid unnecessary repetition.

The control unit may be implemented and/or described as follows:
The control unit 500 comprises processing circuitry 501 and a communication interface 502. The processing circuitry 501 is configured to cause the control unit 500 to obtain information from other entities, such as one or more cameras. The processing circuitry 501 is further configured to cause the control unit 500 to trigger an action, such as an adjustment of the speed or operation of the scraper, based on the obtained information. The communication interface 502, which may also be denoted e.g. Input/Output (I/O) interface, includes a wired and/or a wireless interface for sending data, such as commands, to other nodes or entities, and for obtaining/receiving information from other nodes or entities, such as sensors or user devices.

Figure 5b shows an embodiment of the processing circuitry 501 which comprises a processing device 503, such as a general-purpose microprocessor, e.g. a CPU, and a memory 504, in communication with the processing device, that stores or holds instruction code readable and executable by the processing device. The instruction code stored or held in the memory may be in the form of a computer program 505, which when executed by the processing device 503 causes the control unit 500 to perform the actions in the manner described above.

An alternative implementation of the processing circuitry 501 is shown in figure 5c. The processing circuitry here comprises an obtaining unit 507 for causing the control unit to obtain information. The processing circuitry further comprises a determining unit 509 for determining, based on the obtained information whether a certain criterion is fulfilled. The processing circuitry further comprises a triggering unit 510, for causing the control unit 500 to trigger an action to be performed when the criterion is determined to be fulfilled.

The processing circuitry 501 could comprise more units configured to cause the control unit to perform actions associated with one or more of the method embodiments described herein. As examples, unit 508 is provided, having dashed outline. Alternatively, any of the units 507, 509-510 could be configured to also cause the control unit to perform such other actions. The control unit 500 could, for example, comprise a determining unit for determining whether the scraper arrangement is set in a specific mode, implicating certain features. The control unit 500 could further comprise an image analysis and/or object recognition unit 508, for detecting an object and/or a position of an object and/or a predefined scenario in at least one image captured by the one or more cameras. This, and other tasks, could alternatively be performed by one of the other units.

The control unit 500 may comprise further functionality, for carrying out control unit functions not specifically mentioned herein, related e.g. to standard operation scraper arrangement.

The foregoing description of a control unit 500 is not intended to be limiting. The processing circuitry may also be implemented by other techniques known in the art, such as, e.g., hard-wired transistor logic or application-specific integrated circuits arranged in a manner sufficient to carry out the actions of the control unit 500 as described above.

Figure 6 shows an exemplifying embodiment in a schematic view of a barn alley 603. A scraper 601 is arranged to operate in the alley 603. The scraper is arranged to be pulled forward (and backwards, when appropriate) by a scraper driving arrangement 602, also comprising a motor (not shown). Two cameras, 604:1-2 are mounted on the walls at a certain distance from the floor. The cameras are mounted such as to overlook the area of operation of the scraper 601. Than is, the cameras are arranged to have at least a part of the area of operation of the scraper in their field of view. The cameras provide captured images or information derived from captured images to a processing unit (not shown). The processing unit may then determine the current position of the scraper in the alley, and trigger an appropriate action, e.g. from the scraper driving arrangement 602, when the determined position is determined to corresponds to a predefined position, such as a start position, an end position, or a specific intermediate position. Further, obstacles 605 in the alley may be detected, and the movement, e.g. speed, of the scraper 601 may be adjusted as a consequence of the detected obstacle. The obstacle 605 may be an animal or other moving object, and a movement of the obstacle 605 could be analysed in relation to a movement of the scraper 601 to determine whether a collision is impending/approaching. In that case, the processing unit may trigger an appropriate action of the scraper driving arrangement to avoid the collision, such as e.g. stopping the scraper, slowing down the speed of the scraper or even speeding up the scraper. The processing unit could further trigger the scraper 601 to fold in order to avoid the obstacle. This, however, requires that folding functionality is implemented.

Figure 7 is a schematic view of a scraper 703 and a scraper driving mechanism 704. The exemplifying distance of operation of the scraper is 70 meters, with a start position 701 at 0 meters and an end position 702 at 70 meters. The start and end positions may be calibrated using images captured when the scraper is located in these positions, or by virtual calibration, where these positions are defined e.g. in a user control interface, which preferably is graphical, where different positions of the scraper may be defined in relation to images captured by one or more cameras overlooking the area of operation, as previously described.

The features of embodiments described herein could be used separately or in combination, e.g. depending on needs or preference. To summarize some of the elements and features of the described subject matter:
Exemplifying elements and features associated with embodiments:
   - One or more cameras, operable to at least one of:
      - capture two- or three dimensional images of an area;
      - provide information related to the captured images to other entities;
      - perform image processing and/or object recognition;
   - One or more scrapers, operable to be pulled (or pushed) along a route of operation in order to clear e.g. manure from a floor;
   - A scraper driving mechanism operable to at least one of:
      - pull (and/or push) the scraper along a route of operation;
      - reverse the scraper to its start position;
      - change the speed and/or force with which the scraper is pulled;
      - stop the scraper in response to a command, sensor input, or similar;
      - receive input from a processing unit, the info being based on information derived from images captured by one or more cameras overlooking e.g. at least part of an area of operation of the scraper.
      - provide information on characteristics of a motor, such as an applied force over time and/or a resistance felt by the scraper, to other entities;
      - estimate a position of the scraper along its route of operation based on characteristics of the driving mechanism, such as determined/logged operation of a motor, a determined/logged cable/wire distance;
      - provide estimated information to other entities, such as e.g. a processing unit associated with the one or more cameras;
      - calibrating the position of the scraper, e.g. by correcting the estimated position based on information (based on camera input) received from a processing unit, or by shortening of a pulling wire (or similar/corresponding) or other adjustment to the pulling (or pushing) mechanism;

The scraper driving mechanism could comprise or be connected to a control unit with processing circuitry, operable to handle e.g. wired or wireless communication with other entities; estimation and/or logging operations and control functions.
- A processing unit operable to at least one of:
   - obtain information from one or more cameras related to images captured by said one or more cameras;
   - obtain information associated with a scraper driving mechanism, related e.g. to an estimated position of a scraper;
   - perform image processing and/or object recognition;
   - trigger actions to be performed by a scraper driving mechanism;
   - provide information to a scraper driving mechanism (e.g. a therewith associated processing unit);
   - provide information or alert signals to a user interface;
   - obtain information from a user interface, e.g. for configuration/initialization of scraper positions;
   - defining or adjusting a schedule for operation of a scraper based on information obtained from one or more cameras;
   - initializing a scraper arrangement, e.g. defining start and end positions, based on information obtained from one or more cameras and/or on information obtained from a user interface.

To further summarize, the steps, functions, procedures, modules, units and/or blocks described herein may be implemented in hardware using any conventional technology, such as discrete circuit or integrated circuit technology, including both general-purpose electronic circuitry and application-specific circuitry.

Alternatively, at least some of the steps, functions, procedures, modules, units and/or blocks described above may be implemented in software such as a computer program for execution by suitable processing circuitry including one or more processing units. The software could be carried by a carrier, such as an electronic signal, an optical signal, a radio signal, or a computer readable storage medium before and/or during the use of the computer program in the nodes.

The flow diagram or diagrams presented herein may be regarded as a computer flow diagram or diagrams, when performed by one or more processors. A corresponding apparatus may be defined as a group of function modules, where each step performed by the processor corresponds to a function module. In this case, the function modules are implemented as a computer program running on the processor.

It should also be understood that it may be possible to re-use the general processing capabilities of any conventional device or unit in which the proposed technology is implemented. It may also be possible to re-use existing software, e.g. by reprogramming of the existing software or by adding new software components.

The embodiments described above are merely given as examples, and it should be understood that the proposed technology is not limited thereto. It will be understood by those skilled in the art that various modifications, combinations and changes may be made to the embodiments without departing from the present scope. In particular, different part solutions in the different embodiments can be combined in other configurations, where technically possible.

When using the word "comprise" or "comprising" it shall be interpreted as non- limiting, i.e. meaning "consist at least of".

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated, and/or blocks/operations may be omitted without departing from the scope of inventive concepts.

It is to be understood that the choice of interacting units, as well as the naming of the units within this disclosure are only for exemplifying purpose, and nodes suitable to execute any of the methods described above may be configured in a plurality of alternative ways in order to be able to execute the suggested procedure actions.

It should also be noted that the units described in this disclosure are to be regarded as logical entities and not with necessity as separate physical entities.

## Claims

1. Method for controlling the operation of a manure scraper (601) based on information obtained from one or more cameras (604) mounted such as to capture images of the area of operation of the scraper, comprising the actual need of manure to be cleared by the scraper determined by means of image processing of the images obtained by the camera(s), and wherein the controlling comprises triggering an action related to the scraper when information derived based on said obtained information fulfills a criterion, wherein the criterion relates to the amount of detected manure to be cleared, and/or the position of detected manure to be cleared, **characterised in that** the method further comprises:
observing the amount of manure present at different parts of the area which is to be cleared by the scraper, and wherein the speed of the scraper is dynamically adapted to the observed presence of manure.

2. Method according to claim 1, wherein, where manure has been observed, the scraper is controlled to adopt a slower speed, more appropriate for displacing manure.

3. Method according to claim 2, wherein the lower speed is maintained until the manure is cleared to a drain.

4. Method according to claim 1 comprising estimating the amount of manure that needs to be cleared by a scraper, testing the capacity of the scraper, to derive a maximum amount of manure which can be handled by the scraper in one sweep, and activating the scraper when this derived maximum amount of manure is observed, by means of image processing, in the area of operation of the scraper.

5. Method according to any one of the preceding claims further comprising estimating the consistency of the manure may be based on the camera images.

6. Method according to claim 5 comprising activating the scraper based on the estimated consistency, such as before the manure becomes too dry to displace.

7. Method according to claim 5 or 6 further comprising adding water to the manure if needed by means of a watering system.

8. Control unit (500) for a manure scraper, configured to perform the method according to any one of claims 1 to 7.

## Patentansprüche

1. Verfahren zum Steuern des Betriebs eines Gülleschiebers (601) basierend auf Informationen, die von einer oder mehreren Kameras (604) erhalten werden, die derart montiert sind, um Bilder des Betriebsbereichs des Schiebers zu erfassen, umfassend den tatsächlichen Bedarf von Gülle, die durch den Schieber abzuräumen ist, bestimmt mittels einer Bildverarbeitung der Bilder, die durch die Kamera(s) erhalten werden, und wobei das Steuern ein Auslösen einer Aktion umfasst, die sich auf den Schieber bezieht, wenn Informationen, die basierend auf den erhaltenen Informationen abgeleitet werden, ein Kriterium erfüllen, wobei sich das Kriterium auf eine Menge von erkannter Gülle, die abzuräumen ist und/oder die Position erkannter Gülle bezieht, die abzuräumen ist, **dadurch gekennzeichnet, dass** das Verfahren ferner umfasst: Beobachten der Menge von Gülle, die an unterschiedlichen Teilen des Bereichs vorhanden ist, der durch den Schieber abzuräumen ist, und wobei die Geschwindigkeit des Schiebers an das beobachtete Vorhandensein von Gülle dynamisch angepasst ist.

2. Verfahren nach Anspruch 1, wobei, wenn die Gülle beobachtet wurde, der Schieber gesteuert wird, um eine langsamere Geschwindigkeit anzunehmen, die zum Verdrängen von Gülle geeignet ist.

3. Verfahren nach Anspruch 2, wobei die niedrigere Geschwindigkeit aufrechterhalten wird, bis die Gülle an einen Abfluss abgeräumt ist.

4. Verfahren nach Anspruch 1, umfassend ein Schätzen der Menge von Gülle, die durch einen Schieber abgeräumt werden muss, Prüfen der Kapazität des Schiebers, um eine maximale Menge von Gülle abzuleiten, die durch den Schieber in einem Durchlauf gehandhabt werden kann, und ein Aktivieren des Schiebers, wenn diese abgeleitete maximale Menge von Gülle mittels Bildverarbeitung in dem Betriebsbereich des Schiebers beobachtet wird.

5. Verfahren nach einem der vorstehenden Ansprüche, ferner umfassend, dass das Schätzen der Konsistenz der Gülle auf den Kamerabildern basieren kann.

6. Verfahren nach Anspruch 5, umfassend das Aktivieren des Schiebers basierend auf der geschätzten Konsistenz, wie bevor die Gülle zu trocken wird, um verdrängt zu werden.

7. Verfahren nach Anspruch 5 oder 6, ferner umfassend ein Hinzufügen von Wasser zu der Gülle, falls notwendig, mittels eines Bewässerungssystems.

8. Steuereinheit (500) für einen Gülleschieber, die konfiguriert ist, um das Verfahren nach einem der Ansprüche 1 bis 7 durchzuführen.

## Revendications

1. Procédé permettant de commander le fonctionnement d'un racleur de fumier (601) sur la base d'informations obtenues à partir d'une ou plusieurs caméras (604) montées de manière à capturer des images de la zone de fonctionnement du racleur, comprenant le besoin réel d'évacuation de fumier par le racleur déterminé au moyen d'un traitement d'image des images obtenues par la ou les caméras, et dans lequel la commande comprend le déclenchement d'une action liée au racleur lorsque des informations dérivées sur la base desdites informations obtenues remplissent un critère, dans lequel le critère se rapporte à la quantité de fumier détectée à évacuer, et/ou à la position de fumier détectée à évacuer, **caractérisé en ce que** le procédé comprend en outre : l'observation de la quantité de fumier présente à différents endroits de la zone qui doit être évacuée par le racleur, et dans lequel la vitesse du racleur est adaptée dynamiquement à la présence observée de fumier.

2. Procédé selon la revendication 1, dans lequel, là où le fumier a été observé, le racleur est commandé pour adopter une vitesse plus lente, plus appropriée pour déplacer le fumier.

3. Procédé selon la revendication 2, dans lequel la vitesse inférieure est maintenue jusqu'à ce que le fumier soit évacué vers un drain.

4. Procédé selon la revendication 1, comprenant l'estimation de la quantité de fumier devant être évacuée par un racleur, l'essai de la capacité du racleur, pour en déduire une quantité maximale de fumier qui peut être manipulée par le racleur en un passage, et l'activation du racleur lorsque cette quantité maximale dérivée de fumier est observée, au moyen de traitement d'images, dans la zone de fonctionnement du racleur.

5. Procédé selon l'une quelconque des revendications précédentes, comprenant en outre l'estimation de la consistance du fumier qui peut être basée sur les images de caméra.

6. Procédé selon la revendication 5, comprenant l'activation du racleur sur la base de la consistance estimée, par exemple avant que le fumier ne devienne trop sec à déplacer.

7. Procédé selon la revendication 5 ou 6, comprenant en outre l'ajout d'eau au fumier si nécessaire au moyen d'un système d'arrosage.

8. Unité de commande (500) pour un racleur de fumier, conçu pour effectuer le procédé selon l'une quelconque des revendications 1 à 7.
